# EUROPEAN PATENT SPECIFICATION

(11) **EP 1 366 975 B1**
(45) Date of publication and mention of the grant of the patent: **14.11.2007**
(21) Application number: 03012065.3
(22) Date of filing: 28.05.2003
(51) Int. Cl.: B62K 11/06, B62K 11/08, B62K 19/46

(54) **Vehicle and vehicle body frame**
Fahrzeug und Fahrzeugrahmen
Véhicule et cadre de véhicule

(30) Priority: 29.05.2002 JP 2002156017
(43) Date of publication of application: 03.12.2003
(73) Proprietor: Yamaha Hatsudoki Kabushiki Kaisha, Iwata-shi, Shizuoka-ken (JP)
(72) Inventor: Kitsunai, Toru, c/o Yamaha Hatsudoki K.K., Iwata-Shi, Shizuoka-ken (JP); Koike, Toshikatsu, Yamaha Hatsudoki K.k., Iwata-Shi, Shizuoka-ken (JP); Yamagata, Hiroshi, Yamaha Hatsudoki K.k., Iwata-Shi, Shizuoka-ken (JP)
(74) Representative: Grünecker, Kinkeldey, Stockmair & Schwanhäusser Anwaltssozietät

(56) References cited:
- EP-A- 1 254 830
- BE-A- 534 742
- BE-A- 537 254
- FR-A- 2 364 598
- GB-A- 110 103
- GB-A- 165 485
- JP-A- 59 075 880
- JP-A- 59 077 991
- RO-B- 113 832
- US-A- 3 269 480

## Description

The present invention relates to a vehicle body frame according to the preamble portion of claim 1. Such vehicle body frames are particularly usable for two-wheelers or three-wheelers. Moreover, the present invention relate to a two-wheeled or three-wheeled vehicle according to the preamble part of claim 13.

As a technology relating to a vehicle body frame of two-wheelers or three-wheelers (two-wheeled vehicles or three-wheeled vehicles), for example, there are ones disclosed in Laid-open disclosure public patent bulletin JP-A-2000-280962, JP-A-9-263279, or JP-A-59-77991.

In JP-A-2000-280962, "In a vehicle body frame for compact vehicles comprising a head pipe (11) rotatably and steerably supporting a front wheel (WF), a down frame (12) extending rearward and downward from the head pipe (11), and a seat pipe (13) extending upward from the rear end of the down frame (12), a vehicle body frame for motorcycles wherein the head pipe (11) and the seat pipe (13) having axes extending in parallel with each other are molded integrally with the down frame (12) by the casting process." is disclosed.

The down frame (12) described above is formed in U-shape in cross section, which is open downward, and a fuel tank (21) for the motorcycle is mounted in the down frame of U-shape in cross section. Further, "a vehicle body frame for motorcycles characterized in that an engine (28) having a crankcase (33) that is constructed partially by the down frame (12) is mounted on the lower surface of the down frame" is disclosed.

In JP-A-9-263279, intending to secure a sufficient floor space in the vehicle body by rationally disposing the rear cushion of the scooter-type vehicle forwardly of the power unit, "A scooter-type vehicle in which the front portion of the power unit (P) provided with a rear wheel (WR) at the rear portion thereof is heightwise swingably supported by the vehicle body (FF), characterized in that a pair of left and right mounting arms (31) projected from the front portion of the aforementioned power unit (P) are joined to the vehicle body (FF) via link mechanisms (48) and a rear cushion (37) for absorbing the vertical swinging motion of the power unit (P) is disposed between the aforementioned pair of left and right mounting arms (31)" is disclosed.

The body portion (4) of the aforementioned scooter-type vehicle includes a front frame (FF) formed by casting light alloy such as aluminum alloy or the like as a single unit, and a rear frame (RF) of synthetic resin connected to the rear end of the front frame (FF) by a bolt (21).

The lateral cross section of the aforementioned front frame (FF) is inverted U-shape opened on the bottom, and a plurality of reinforcing ribs (5) are integrally formed therein. A fuel tank (14) is supported by a bracket (15) provided integrally with the front frame (FF) on the lower side of the front frame (FF) by means of a bolt.

In JP-A-59-77991, a vehicle body frame in which a front frame (5) and a rear frame (6) are separately formed of light alloy by casting, and the front frame (5) and the rear frame (6) are joined by a bolt (7). The front frame (5) and the rear frame (6) are formed separately into the left half and right half by casting and joined together with a bolt.

The vehicle body frame for motorcycles disclosed in the aforementioned JP-A-2000-280962 includes a down frame (12) portion being U-shape opening downwardly in cross section. When an external force is exerted from the front wheel and the rear wheel, since the cross section is U-shape, the thickness is increased to improve the rigidity of the vehicle body frame, thereby leading to such problem that the weight of the vehicle increases.

Since the fuel tank (21) is disposed downwardly of the down frame, the protective countermeasures against small pebbles, foreign substances and muddy water bounced off the ground, for example, countermeasures such as to increase the thickness of the steel plate used for the fuel tank for increasing rigidity of the fuel tank (21), to increase the thickness of coating for preventing rusting, to provide water-proof finish of the electrical wiring, and so on are required.

The vehicle body frame disclosed in JP-A-9-263279 is a frame including the front portion and the rear portion joined at the midpoint thereof. The cross section of the front frame (FF) is inverted U-shape opening downwardly. Therefore, when an external force is exerted from the front wheel and the rear wheel, a stress concentrates on the joint between the front and rear frames. Consequently, the thickness of the frame is increased to improve its rigidity, and thus the weight of the vehicle increases accordingly. In addition, since the configuration of the cross section is U-shape, the thickness is required to be larger than in normal cases.

Furthermore, since the fuel tank (14) is mounted on the lower surface of the front frame (FF) of downwardly opened inverted U-shape, countermeasure as in JP-A-2000-280962 against the pebble, foreign substances, muddy water, and so on bounced off the ground is necessary.

The vehicle body frame disclosed in JP-A-59-77991 is a vehicle body frame including a front frame (5) and a rear frame (6) joined by a bolt (7) with each other. In the same manner as the aforementioned two related arts, when an external force is applied from the front wheel and the rear wheel, a stress is concentrated especially to the joint between the front and rear frames. Therefore, the thickness of the frame is increased to improve rigidity, and thus the weight of the vehicle increases. Furthermore, since the internal space of the frame is narrow, the usage of the internal space is limited.

Moreover, from JP-A-59-075880 a vehicle frame and a vehicle as disclosed in the preamble of claim 1 are known.

In order to solve the problems described above, it is an objective of the present invention to improve a vehicle body frame as indicated above so as to have high rigidity and to be capable of storing engine-related components such as a fuel tank or electric equipment in the closed space in the down frame completely.

This objective is solved by a vehicle body frame having the features of claim 1.

Further preferred embodiments are laid down in the respective dependent claims.

It is a further objective of the present invention to provide a vehicle as indicated above having such a vehicle body frame.

This objective is solved by a vehicle having the features of claim 13.

Further preferred embodiments are laid down in the respective dependent claims.

In the following, the present invention is explained in greater detail with respect to several embodiments thereof in conjunction with the accompanying drawings, wherein:
- Fig. 1: is a side view of a motorcycle in which a vehicle body frame for two-wheelers or three-wheelers;
- Fig. 2: is an exploded explanatory drawing illustrating mounting of an engine and a rear arm on the vehicle body frame;
- Fig. 3: is a drawing viewed in the direction of arrow G (right side view) of Fig. 2;
- Fig. 4: is a cross sectional view taken along the line A-A in Fig. 2;

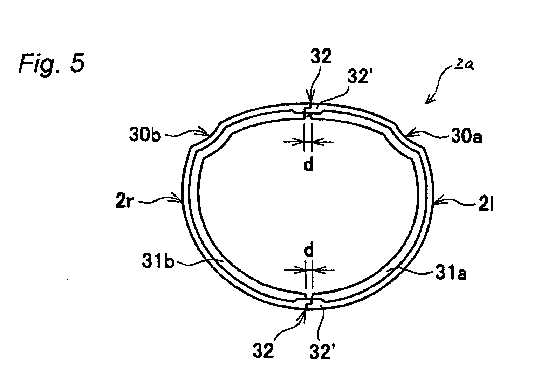

- Fig. 5: is a cross sectional view taken along the line B-B in Fig. 2;
- Fig. 6: is a cross sectional view taken along the line C-C in Fig. 2;
- Fig. 7: is a cross sectional view taken along the line D-D in Fig. 2 (partially omitted);
- Fig. 8: is a cross sectional view taken along the line E-E in Fig. 2;
- Fig. 9: is a drawing viewed in the direction of the arrow F in Fig. 2;
- Fig. 10: is a perspective view showing the right half 2r of the vehicle body frame 2;
- Fig. 11: is an example of another cross sectional configuration of the down frame 2a in Fig. 2;
- Fig. 12: is an example of still another cross sectional configuration of the down frame 2a in Fig. 2;
- Fig. 13: is an example of further cross sectional configuration of the down frame 2a in Fig. 2; and
- Fig. 14: shows an example in another embodiment wherein the ends of the reinforcing ribs 31a, 31b face toward each other without being in contact, in which Fig. 14(a) is an example of the reinforcing ribs being intersected without being in contact with each other, Fig. 14(b) is an example of the reinforcing ribs moved away from each other to form a clearance in the fore-and-aft direction.

### Referring now to the drawings, an embodiment will be described.

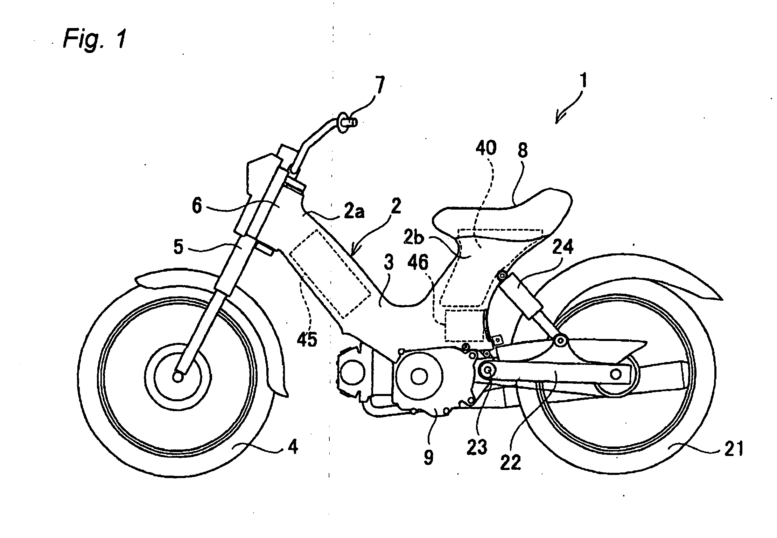

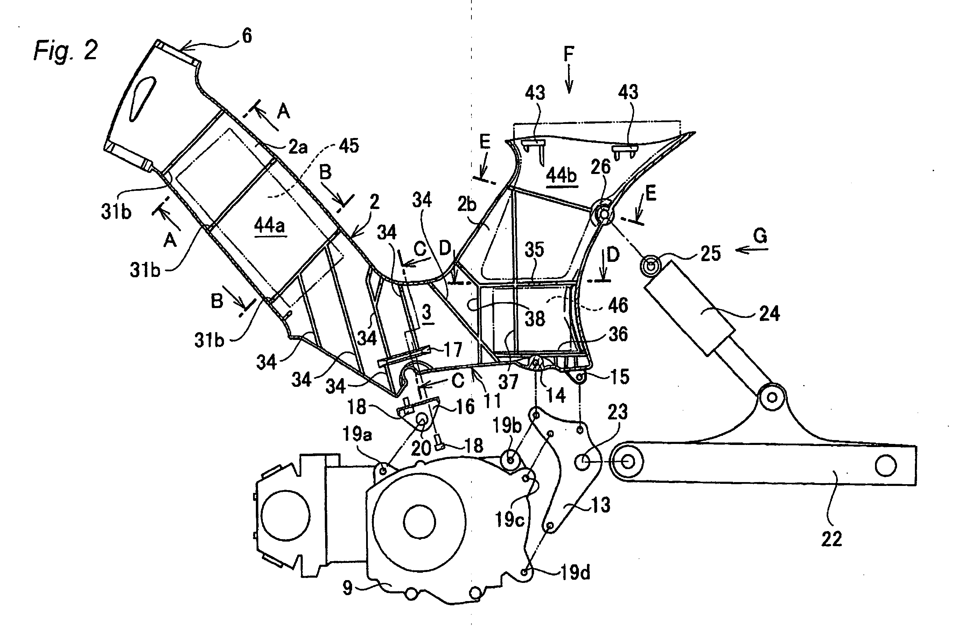

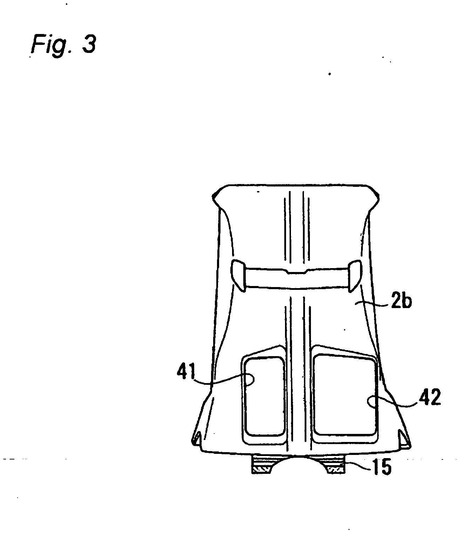

Fig. 1 is a side view of a motorcycle including a vehicle body frame for two-wheelers (two-wheeled vehicle), Fig. 2 is an exploded explanatory drawing illustrating mounting of an engine and a rear arm on the vehicle body frame, and Fig. 3 is a right side view (drawing viewed in the direction of arrow G) of Fig. 2.

In the following description, lengthwise represents the direction toward the front and rear of a motorcycle, in which the front represents the direction of travel of the motorcycle and the rear represents the direction of backward movement of the motorcycle, while widthwise represents the direction toward both the right and left of a motorcycle, in which the left represents the left side and the right represents the right side when viewed in the direction of travel of motorcycle.

As shown in Fig. 1, the motorcycle 1 is assembled using a vehicle body frame 2 according to the present embodiment. The vehicle body frame 2 is substantially downwardly projecting V-shape in side view (or upwardly opening U-shape), and includes a down frame 2a extending forwardly of the synodic portion 3 of the V-shape and a seat frame 2b extending rearwardly of the same.

The aforementioned vehicle body frame 2 is formed by integrally joining a left half 21 of the vehicle body and a right half 2r of the vehicle body formed by casting of light alloy such as aluminum alloy or the like and joined by Friction Stir Welding or by "brazing". It is also possible to form as an unit by casting, without dividing into the left and right halves.

Forming the vehicle body frame 2 of light alloy such as aluminum alloy or the like by casting realizes lighter-weight, higher-rigidity, lower-cost, and mass production in comparison with the frame of welded steel pipe or vehicle body frame of welded light alloy. In addition, dividing into the left and right halves facilitates die-cutting after casting.

When rigidity is not critical, resin (plastic) may be used for the vehicle body frame 2.

The aforementioned down frame 2a is integrally formed on the upper portion thereof with a head pipe 6 for rotatably supporting the front fork 5 that is rotatably supporting the front wheel 4. The front fork 5 is provided with a steering handle 7 on the upper portion thereof.

The seat frame 2b extending upper right is formed rearwardly of the aforementioned synodic portion 3. A seat 8 on which the driver sits is mounted on the seat frame 2b so as to be openable and closable.

As shown in Fig. 2, an opening 11 for mounting an engine 9 is formed on the lower surface of the synodic portion 3 of the aforementioned vehicle body frame 2. In order to suspend the engine 9 from the vehicle body frame 2, a pair of rear brackets 13 for supporting the rear side surfaces of the engine 9 are secured to the mounting holes 14, 15 formed on the lower portion of the vehicle body frame 2 with a bolt (not shown).

Alternatively, it is also possible to mount a power source such as an electric motor, a battery, or a fuel cell on the lower surface of the synodic portion 3 instead of the aforementioned engine 9, and drive the electric motor by this power source to rotate the rear wheel.

A front bracket 16 for supporting the front side surfaces of the aforementioned engine 9 is secured to the mounting seat 17 formed integrally with the inner wall of the vehicle body frame 2 with a bolt 18.

The engine 9 is formed of four mounting bosses 19 (a, b, c, d), and the engine 9 is mounted on the vehicle body frame 2 via the aforementioned rear bracket 13 and the front bracket 16 with a bolt (not shown) passing through the bosses 19 (a, b, c).

The rear bracket 13 is formed of mounting holes at the positions corresponding to the holes of the bosses 19 (b, c, d), and the position of the hole of the boss 19a is formed to be aligned with a mounting hole 20 of the front bracket 16 secured to the mounting seat 17.

A rear fork 22 rotatably supporting the rear wheel 21 at the rear end thereof is rotatably supported on the pivot 23 supported on the aforementioned rear bracket 13. A shaft 25 provide at the upper end of the shock absorber 24 rotatably supported at about the lengthwise midpoint of the rear fork 22 is connected to the shaft hole 26 at the upper portion of the seat frame 2b.

The shape of the vehicle body frame 2 in lateral cross section will now be described.

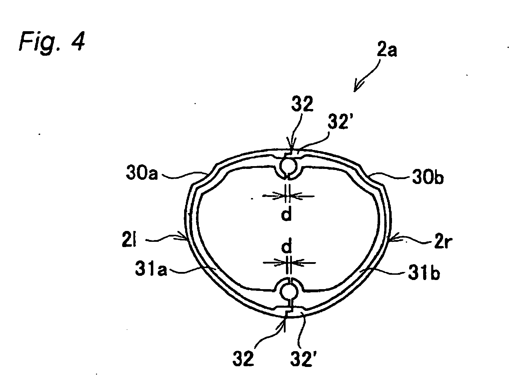

As shown in Fig. 4, the down frame 2a is formed by joining the left half 21 of the vehicle body and the right half 2r of the vehicle body. Formed on the inner sides of the upper and lower joints 32 so as to extend substantially lengthwise of the down frame 2a are thickened portions 32' as reinforcing members for increasing rigidity, and recesses and projections to be engaged with each other.

The shape of the down frame 2a in the vicinity of the head pipe 6 in cross section has a flat triangular shape projecting downward and having a height slightly smaller than the width as shown in Fig. 4. The down frame 2a is also formed with recesses 30 (a, b) as reinforcing members for increasing rigidity at two positions in cross section on the upper portion of the outer periphery thereof so as to extend substantially lengthwise.

Provision of the thickened portions 32' and the recesses 30 (a, b) as described above increases the section modulus of the down frame 2a with respect to vertical flexure, and thus deflection of down frame 2a when vertical bending moment is exerted thereon may be reduced.

The inner periphery of the cross section described above is formed with a plurality of annular reinforcing ribs 31 (a, b) being small in height along the cross sectional configuration as reinforcing member for improving rigidity. Slight clearances d are formed between the ends of the reinforcing ribs 31 (a, b) at the aforementioned joint 32 so that the ends of the reinforcing rib 31 a and the ends of the reinforcing rib 31b do not come in contact with each other.

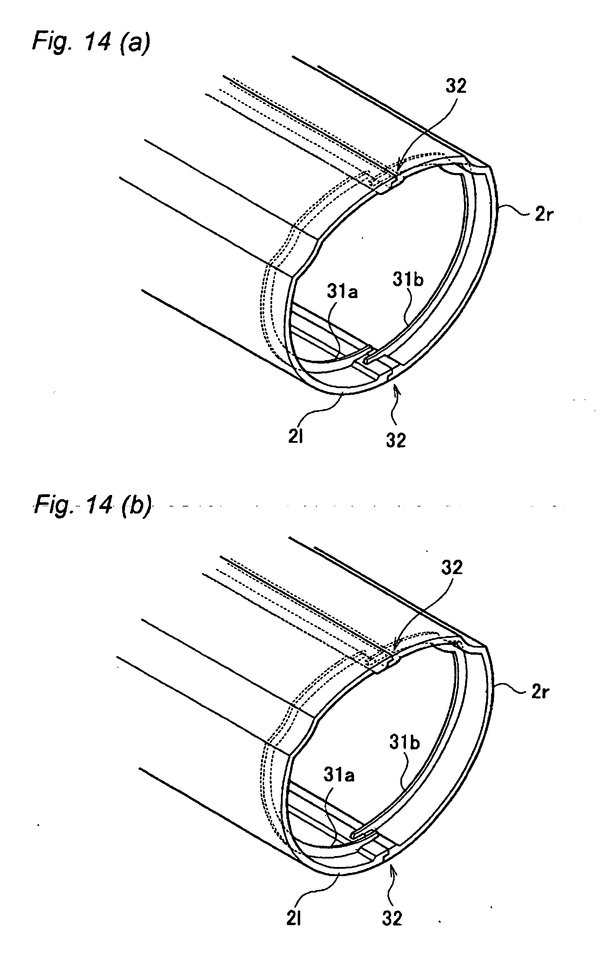

As a measure for bringing the ends of the aforementioned reinforcing ribs 31 (a, b) out of contact with each other, a clearance d as described above may be provided, but it is also possible to provide some amount of angles on the reinforcing rib 31a and the reinforcing rib 31 b so that they intersect with each other without being brought into contact with each other at the aforementioned joints 32 as shown in Fig. 14(a). Alternatively, as shown in Fig. 14(b), the positions of the reinforcing rib 31a and the reinforcing rib 31b may be moved to some extent away from each other in the fore-and-aft direction.

Providing the reinforcing ribs 31 (a, b) so that the ends thereof are kept out of contact with each other as is described above may avoid such phenomena in advance that the ends of the annular reinforcing ribs 31 (a, b) generate noise or are deformed due to contact with each other as a result of deformation of the vehicle body frame. The cross sections of the down frame 2a at the front and at the rear are analogous, and it gradually increases toward the rear.

Provision of the plurality of reinforcing ribs 31 (a, b) within the down frame 2a for improving rigidity as is described above could reduce noise generated from the down frame 2a during the travel of the motorcycle.

Though the reinforcing ribs 31 (a, b) provided as reinforcing member shown in the aforementioned embodiment are constructed in such a manner that a plurality of annular ribs are integrally formed with the down frame 2a, but a plurality of ribs are not necessarily required. The configuration thereof must only have function to improve rigidity, and thus it is not limited to the rib. The same effect may also be exercised by attaching a separate reinforcing member on the down frame 2a, and by utilizing a component to be stored therein as a reinforcing member.

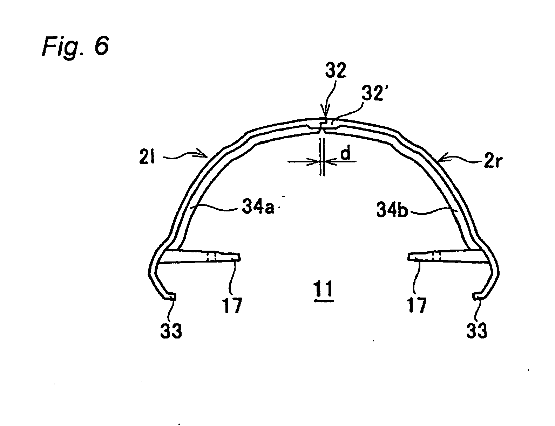

Fig. 6 is a cross sectional view of a synodic portion between the down frame 2a and the seat frame 2b comes into contact. The aforementioned opening 11 is formed on the lower surface, and a flange 33 extending substantially horizontally on the inner side around the opening 11.

Formation of the aforementioned flange 33 extending horizontally around the opening 11 improves an action of limiting broadening of the opening on the lower surface of the synodic portion when a force is exerted on the vehicle body frame 2 in the direction to open or to close the V-shape. In addition, mounting the engine 9 at the opening via the front bracket 16 and the rear bracket 13 may limit the broadening thereof because rigidity at the opening is increased.

A reinforcing rib 34 is formed on the inner wall of the synodic portion 3 of the V-shape of the vehicle body frame 2 disposed in the direction parallel with the direction of tension generated at the synodic portion of the U-shape or of the V-shape due to a load exerted on the vehicle body frame. Though a plurality of reinforcing ribs 34 are disposed in the directions inclined about 15° from the front upper portion toward the rear lower portion with respect to the vertical axis of the vehicle body in the vehicle body frame 2 in the embodiment, the same effects may be exercised as far as inclination is within the range of about 10° to 20°.

By providing the reinforcing ribs 34 on the vehicle body frame 2 as described above, when a load is exerted in the direction to close or to open the V-shaped vehicle body frame 2, the aforementioned reinforcing ribs 34 effectively work against the tension generated in substantially parallel with the aforementioned reinforcing rib 34. Therefore, rigidity of the synodic portion 3 could be improved without increasing the mass of the vehicle body frame 2. The number of the rib does not have to be more than one.

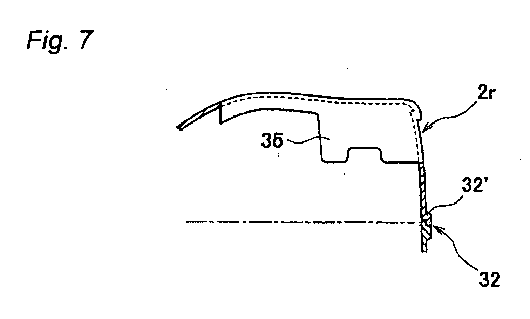

Fig. 7 is a cross sectional view showing the lower portion of the seat frame 2b. A horizontal rib 35 is provided on the inner periphery of the vehicle body frame 2 as a reinforcing member extending substantially lengthwise and substantially widthwise. Provided downwardly of the horizontal rib 35 and in the vicinity of the aforementioned opening 11 is a horizontal wall plate 36 (See Fig. 2). Further, ribs 37 and 38 are provided on the inner wall between the aforementioned horizontal rib 35 and the wall plate 36 as vertical reinforcing members of the vehicle body.

The orientation of the aforementioned ribs 37, 38 are not limited to the vertical direction, and they may be disposed obliquely.

Since the horizontal rib 35 extending substantially lengthwise and substantially widthwise and the ribs 37, 38 extending heightwise of the vehicle body are provided on the inner periphery of the seat frame 2b, rigidity of the lower portion of the seat frame 26 was significantly increased. The horizontal rib 35 or the ribs 37, 38 may be provided either on the inner surface or on the outer surface of the vehicle body frame 2.

Formed on the back of the aforementioned seat frame 2b are openings 41, 42 for carrying in or out the components on the aforementioned wall plate 36 (See Fig. 3).

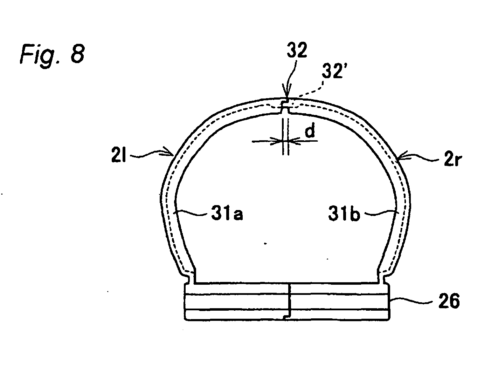

As shown in Fig. 8, the reinforcing ribs 31 (a, b) are provided on the inner wall of the upper portion of the seat frame 2b as reinforcing member for improving rigidity as in the case of the aforementioned down frame 2a, and a slight clearances d are provided so that the ends of the reinforcing rib 31a and the ends of the reinforcing rib31b are not brought into contact with each other.

As described above, since the reinforcing ribs 31 (a, b) are provided on the inner periphery of the upper portion of the seat frame 2b, the effect of reducing noise may be exercised as in the case of the aforementioned down frame 2a. It is also possible to prevent generation of noise due to contact between the ends of the reinforcing ribs or deformation of the seat frame 2b in advance.

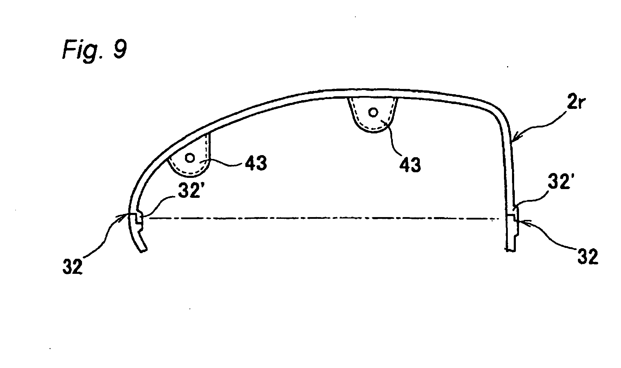

Fig. 9 is a plan view of the seat frame 2b. A mounting seat 43 for mounting the aforementioned seat 8 is formed on the inner wall at the upper end of the seat frame 2b.

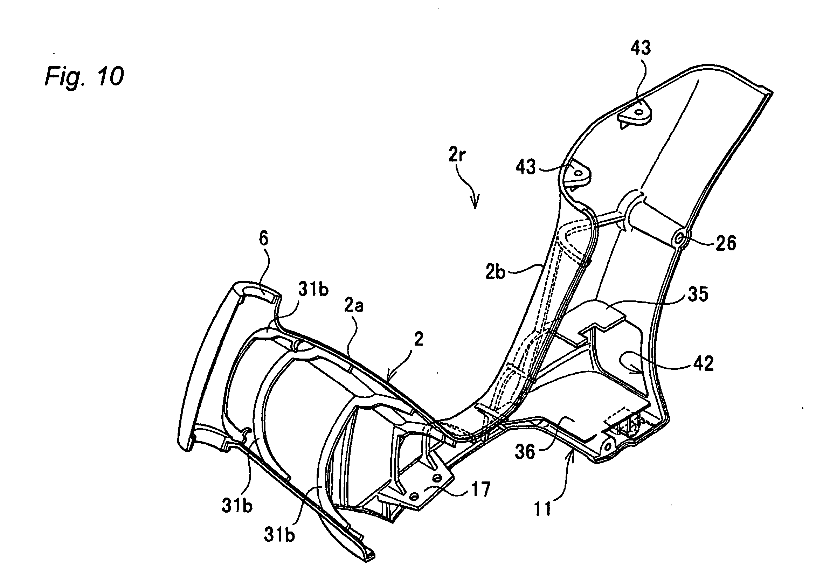

Fig. 10 is a perspective view of the right half 2r when the vehicle body frame 2 is divided into the right and left halves.

Though the cross sectional configuration of the aforementioned down frame 2a is formed into a downwardly projecting flat triangular shape, and a recess 30 for reinforcing rigidity is formed on the outer periphery thereof so as to extend lengthwise of the down frame 2a, it is not limited to such cross sectional configuration.

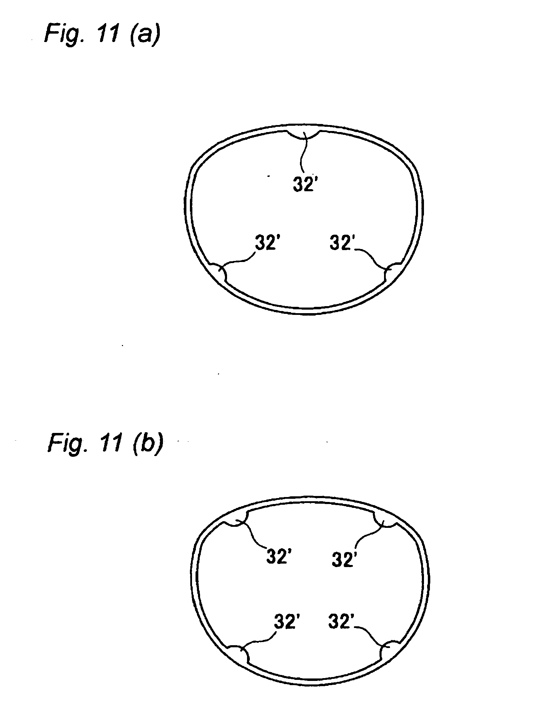

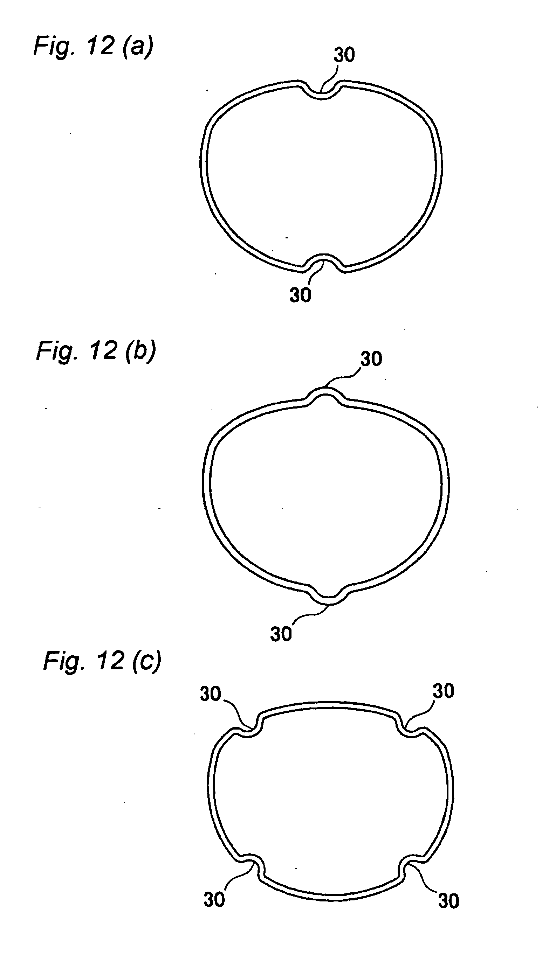

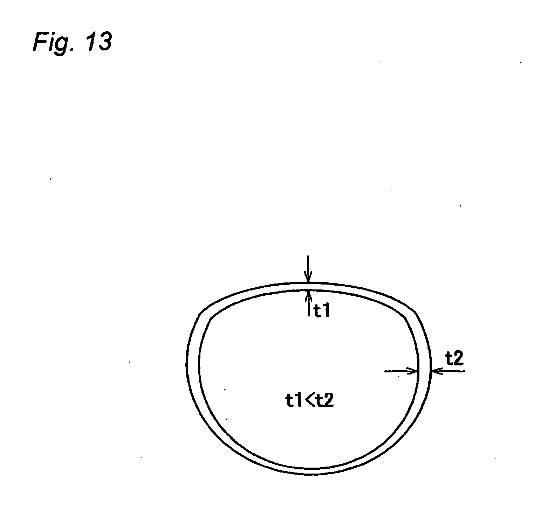

For example, as shown in Fig.11 (a, b), three or four thickened portions 32' extending substantially lengthwise may be provided on the inner wall of the down frame 2a. Alternatively, the recesses 30 may be formed on the upper portion and the lower portion as shown in Fig. 12a, or the projections 30 may be formed on the upper portion and the lower portion as shown in Fig. 12b. Fig. 12c shows an example in which two each, four in total of recesses 30 are formed on the upper portion and the lower portion. It is also possible to increase the thickness t2 of both the left and right side surfaces of the down frame 2a in comparison with the thickness t1 of the upper and lower portions of the same as shown in Fig. 13 to increase rigidity against the vertical flexure.

After all, the configuration of the reinforcing member must only have a cross sectional configuration that can increase rigidity against the vertical flexure with a small amount of material, and may be selected from various configurations such as the aforementioned recess 30, projection 30, thickened portion 32' or some other configurations as appropriate.

In this arrangement, closed segments 44(a, b) in a hollow cylindrical cross section are formed in the front down frame 2a and the rear seat frame 2b of the vehicle body frame 2. The closed segment 44a formed in the down frame 2a may be used as a storage space for storing components such as engine functional components or electrical components.

The engine functional components include a fuel tank, an air cleaner, a carburetor, an fuel pump, a fuel filter and the like, and the electrical components include an ECU, an injector driver, a fuse, a harness connector, a battery, a fuel cell, an electric motor, and the like.

The closed segment 44b formed in the seat frame 2b may be used as a storage box 40 for storing small articles, a helmet, or the like. In the embodiment, a battery 46 is stored in the space on the wall plate 36 at the lower portion of the aforementioned synodic portion.

In the embodiment, since the fuel tank 45 that is one of engine functional components is stored in the aforementioned storage space formed in the closed segment 44a of hollow cylindrical cross section of the front down frame 2a of the vehicle body frame, a protective countermeasure against pebbles, foreign substances, or muddy water bouncing from the ground to the fuel tank 45 during the travel of the motorcycle 1 may be simplified, and thus manufacturing cost may be reduced.

The closed segment 44b of hollow cylindrical cross section formed in the seat frame 2b is used as the storage box 40 for storing small articles, a helmet, or the like, the small articles or a helmet can be protected from wind, rain, and dust.

Since the opening 11 is formed on the lower surface of the synodic portion 3 of the vehicle body frame, attachment and detachment of the fuel tank 45 to be stored in the closed segment 44a of the down frame 2a may easily be performed through this opening.

The aforementioned vehicle body frame 2 shown in the embodiment is substantially V-shape projecting downward (or upwardly opened U-shape) in side view. However, it is not limited to such configuration, and the angle formed between the front down frame 2a and the rear seat frame 2b may be substantially horizontal (180°).

The description above discloses a vehicle body frame for two-wheelers or three-wheelers and two-wheeler or three-wheeler having such vehicle body frame.

According to one embodiment of the vehicle body frame for two-wheeler or a three-wheeler, the vehicle body frame is integrally formed from the front portion to the rear portion, and a part of said vehicle body frame is formed into a closed segment in cross section, and reinforcing members extending substantially widthwise of the vehicle body and/or substantially heightwise of the vehicle body are provided in said closed segment in cross section, and a storage space for storing components or the like is formed in said closed segment in cross section.

Accordingly, since a closed segment is formed in a part of the vehicle body frame, and the interior of the closed segment is used as a storage space for storing components and the like, the large internal space can be provided. In addition, since the components or the like is stored in the interior of the closed segment, a countermeasure against pebbles, foreign substances, muddy water, and the like bounced off the ground may be simplified.

Furthermore, since a reinforcing member extending substantially widthwise of the vehicle body and/or substantially heightwise of the vehicle body is provided in the aforementioned closed segment in cross section, a vehicle body frame of light weight and high rigidity may be manufactured.

According to a preferred embodiment of a two-wheeler or three-wheeler having a vehicle body frame, said vehicle body frame is integrally formed from the front portion through the rear portion, and a portion of said vehicle body frame is formed into a closed segment in cross section, and reinforcing members extending substantially widthwise of the vehicle body and/or substantially heightwise of the vehicle body are provided in said closed segment in cross section, and a storage space for storing components or the like is formed in said closed segment in cross section.

Accordingly, since it is a two-wheeler or a three-wheeler provided with a vehicle body frame as indicated above, components or the like may be stored in the interior of the closed segment in the vehicle body frame, and thus a countermeasure against pebbles, foreign substances, muddy water, and the like bounced off the ground may be simplified. In addition, since lightweight and high rigidity vehicle body frame may be obtained, reduction of manufacturing costs in addition to improvement of performance may be achieved.

According to a further preferred embodiment of a two-wheeler or a three-wheeler, in particular as indicated above, the vehicle body frame is formed into U-shape or V-shape in side view, whereof the front portion and the rear portion of the vehicle body frame extend upward, an downward opening for mounting a power source is formed at the synodic portion of the U-shape or V-shape, and said front and rear portions of the vehicle body frame extending upward are formed into a cylindrical closed section.

Accordingly, since an downward opening for mounting a power source is formed on the U-shaped or V-shaped synodic portion, and the aforementioned front and rear portions of the vehicle body frame extending upward are formed into a cylindrical closed segment, attachment and detachment of the components stored in the cylindrical closed segment may easily performed through this opening.

According to yet another embodiment of a two-wheeler or a three-wheeler, in particular as indicated above, a reinforcing member extending substantially lengthwise of the vehicle body is provided on top and bottom of said front portion and the rear portion of the vehicle body frame, and/or reinforcing members are provided in substantially lengthwise of the vehicle body, substantially heightwise of the vehicle body, and substantially widthwise of the vehicle body on the inner surface of the vehicle body frame at the position around the opening for mounting said power source.

Accordingly, since a reinforcing member extending substantially lengthwise of the vehicle body is provided on the upper portion and the lower portion of the aforementioned front and rear of the vehicle body frame, the section modulus with respect to vertical flexure of the vehicle body frame is increased, and thus deflection generated when vertical bending moment is exerted may be reduced.

According to still another embodiment of a two-wheeler or a three-wheeler, in particular as indicated above, an inwardly oriented flange is provided at the position around the opening for mounting the power source opening downwardly of the vehicle body frame at the synodic portion of said V-shape.

Accordingly, since an inwardly oriented flange is provided at the portion around the opening for mounting an engine opening downwardly of the vehicle body frame at the synodic portion of the V-shape, rigidity of the synodic portion of the V-shape of the vehicle body frame increases.

According to another embodiment of a two-wheeler or a three-wheeler, in particular as indicated above, a reinforcing member being substantially parallel with the direction of tension generated at said synodic portion of the U-shape or V-shape by a load exerted on said vehicle body frame is provided.

Accordingly, since a reinforcing member being substantially parallel with the direction of tension generated at the aforementioned synodic portion of the U-shape or V-shape by a load exerted on the aforementioned vehicle body frame is provided, when a load is exerted in the direction to close or to open the vehicle body frame, the reinforcing member effectively works against the tension generated in the synodic portion, and thus rigidity of the synodic portion may be significantly improved without increasing the mass of the vehicle body frame.

According to still another embodiment of a two-wheeler or a three-wheeler, in particular as indicated above, said vehicle body frame is integrally formed of light alloy by casting, and/or said reinforcing members are formed integrally with said vehicle body frame.

Accordingly, since the vehicle body frame is formed integrally of light alloy by casting, lighter-weight, higher-rigidity, lower-cost, and mass production in comparison with the frame of welded steel pipe or vehicle body frame of welded light alloy may be realized.

According to yet another embodiment of a two-wheeler or a three-wheeler, in particular as indicated above, a left half of the vehicle body and a right half of the vehicle body each formed integrally from the front through the rear of the vehicle body are integrally joined to form a vehicle body frame.

Accordingly, die-cutting after casting may be facilitated.

According to a further embodiment of a two-wheeler or a three-wheeler, in particular as indicated above, the joint between the left half of the vehicle body and the right half of the vehicle body is formed with a reinforcing member extending substantially in the lengthwise of the vehicle body.

Accordingly, since the section modulus with respect to the vertical flexure is increased, rigidity against vertical flexure of the vehicle body frame is improved.

According to yet a further embodiment of a two-wheeler or a three-wheeler, in particular as indicated above, slight clearances are formed between the ends of the left and right reinforcing ribs so that the ends of the reinforcing member of said left half of the vehicle body and the ends of the reinforcing member of the right half of the vehicle body of said vehicle body frame do not come in contact with each other.

Accordingly, contact deformation of the ends of the reinforcing member or generation of noise due to deformation of the vehicle body frame may be avoided.

Thus, in short, there is provided a vehicle body frame for two-wheeler or three-wheelers having high rigidity of the vehicle body frame and being capable of storing components such as a fuel tank or electric equipment in the closed space in the vehicle body frame, and a two-wheeler or a three-wheeler having such vehicle body frame. Particularly, there is provided a vehicle body frame 2 for two-wheeler or a three-wheeler, wherein the vehicle body frame is integrally formed from the front portion to the rear portion, in that a portion of the aforementioned vehicle body frame is formed into a closed segment 44 (a,b) in cross section, wherein reinforcing members (34,35,36,37,38) extending substantially widthwise of the vehicle body and/or substantially heightwise of the vehicle body are provided in the aforementioned closed segment in cross section, and wherein a storage space for storing components or the like in the aforementioned closed segment in cross section. Moreover, there is provided a two-wheeler or three-wheeler having a vehicle body frame wherein the vehicle body frame is integrally formed from the front portion to the rear portion, wherein a portion of the vehicle body frame is formed into a closed segment in cross section, wherein reinforcing members extending substantially widthwise of the vehicle body and/or substantially heightwise of the vehicle body are provided in the closed segment in cross section, and herein a storage space for storing components or the like in the closed segment in cross section.

## Claims

1. Vehicle body frame for a two or three-wheeled vehicle being integrally formed with a down frame (2a) and a seat frame (2b) and comprising a downward opening (11) for mounting a power source (9), wherein a part of said down frame (2a) and/or a part of said seat frame (2b) is formed with a hollow cylindrical cross section (44a, 44b), **characterized in that** at least one reinforcing member (34) is provided on an inner surface of the vehicle body frame at positions around the opening (11), said at least one reinforcing member (34) being formed integrally with said vehicle body frame and disposed in directions inclined between 10° to 20° from a front upper portion towards a rear lower portion with respect to a vertical axis of the vehicle body.

2. Vehicle body frame according to claim 1, **characterized by** at least one reinforcing member (31a, 31b, 34, 35, 36, 37, 38) provided in said hollow cylindrical cross section (44a, 44b), said at least one reinforcing member extending substantially widthwise and/or substantially heightwise of the vehicle body frame.

3. Vehicle body frame according to claim 1 or 2, **characterized by** a storage space for storing components or the like in said hollow cylindrical cross section (44a, 44b).

4. Vehicle body frame according to one any of the preceding claims 1 to 3, **characterized in that** the vehicle body frame is formed into a U-shape or a V-shape in side view thereof, wherein the down frame (2a) and the seat frame (2b) extend upwardly and are connected, wherein said down and seat frames (2a, 2b) of the vehicle body frame are formed into said hollow cylindrical cross section (44a, 44b).

5. Vehicle body frame according to one any of the preceding claims 1 to 4, **characterized by** at least one reinforcing member (30, 30a, 30b) extending substantially lengthwise of the vehicle body frame provided on top and/or bottom of said down and seat frames (2a, 2b) of the vehicle body frame.

6. Vehicle body frame according to any one of the preceding claims1 to 5, **characterized in that** an inwardly oriented flange is provided at a position around the opening (11) for mounting the power source opening downwardly of the vehicle body frame.

7. Vehicle body frame according any one of the preceding claims 1 to 6, **characterized by** the at least one reinforcing member being substantially parallel with the direction of tension generated by a load exerted on said vehicle body frame.

8. Vehicle body frame according to any one of the preceding claims1 to 7, **characterized in that** said vehicle body frame is integrally formed of light alloy or resin by casting.

9. Vehicle body frame according to any one of the preceding claims 1 to 8, **characterized in that** said at least one reinforcing member is formed integrally with said vehicle body frame.

10. Vehicle body frame according to any one of the preceding claims 1 to 9, **characterized in that** the vehicle body frame is divided into left and right halves (21, 2r), each half (21, 2r) being formed integrally from the front through the rear of the vehicle body frame, said halves (21, 2r) being joined to form the vehicle body frame.

11. Vehicle body frame according to claim 10, **characterized in that** a joint between the left and right halves (21, 2r) of the vehicle body frame is formed with a reinforcing member extending substantially in the lengthwise of the vehicle body.

12. Vehicle body frame according to claim 10 or 11, **characterized in that** slight clearances are formed between the ends of the left and right reinforcing ribs so that the ends of the reinforcing member of said left half of the vehicle body and the ends of the reinforcing member of the right half of the vehicle body of said vehicle body frame do not come in contact with each other.

13. Vehicle with two or three wheels comprising a vehicle body frame being integrally formed from a front portion through a rear portion, **characterized by** a vehicle body frame having the features of any one of the preceding claims 1 to 12.

14. Vehicle according to claim 13, **characterized in that** an upper portion of the down frame (2a) is formed with a head pipe (6) for rotatably supporting a front fork (5) and/or a driver seat (8) is mounted on the seat frame (2b) so as to be operable and closable.

## Patentansprüche

1. Fahrzeugkarosserierahmen für ein zwei- oder dreirädriges Fahrzeug, das einstückig mit einem Unterrahmen (2a) und einem Sitzrahmen (2b) gebildet ist, und der eine abwärtige Öffnung (11) zum Montieren einer Antriebsquelle (9) aufweist, wobei ein Teil des Unterrahmens (2a) und / oder ein Teil des Sitzrahmens (2b) mit einem hohlen zylindrischen Querschnitt (44a, 44b) gebildet ist, **dadurch gekennzeichnet, dass** zumindest ein Verstärkungsteil (34) auf einer inneren Oberfläche des Fahrzeugkarosserierahmens an Positionen rund um die Öffnung (11) vorgesehen ist, wobei das zumindest eine Verstärkungsteil (34) mit dem Fahrzeugkarosserierahmen einstückig gebildet ist und in Richtungen, geneigt zwischen 10° bis 20° von dem vorderen oberen Abschnitt in Richtung zu einem hinteren unteren Abschnitt in Bezug auf eine vertikale Achse der Fahrzeugkarosserie angeordnet ist.

2. Fahrzeugkarosserierahmen nach Anspruch 1, **gekennzeichnet durch** zumindest ein Verstärkungsteil (31 a, 31 b, 34, 35, 36, 37, 38), vorgesehen in dem hohlen zylindrischen Querschnitt (44a, 44b), wobei sich das zumindest eine Verstärkungsteil im Wesentlichen in der Richtung der Breite und /oder im Wesentlichen in die Richtung der Länge des Fahrzeugkarosserierahmens erstreckt.

3. Fahrzeugkarosserierahmen nach Anspruch 1 oder 2, **gekennzeichnet durch** einen Unterbringungsraum zum Unterbringen von Komponenten oder dergleichen in dem hohlen zylindrischen Querschnitt (44a, 44b).

4. Fahrzeugkarosserierahmen nach einem der vorhergehenden Ansprüche 1 bis 3, **dadurch gekennzeichnet, dass** der Fahrzeugkarosserierahmen in einer U- Form oder einer V- Form in der Seitenansicht desselben gebildet ist, wobei sich der Unterrahmen (2a) und der Sitzrahmen (2b) aufwärts erstrecken und verbunden sind, wobei der Unterrahmen und der Sitzrahmen (2a, 2b) des Fahrzeugkarosserierahmens in dem hohlen zylindrischen Querschnitt (44a, 44b) gebildet sind.

5. Fahrzeugkarosserierahmen nach einem der vorhergehenden Ansprüche 1 bis 4, **gekennzeichnet durch** zumindest ein Verstärkungsteil (30, 30a, 30b), das sich im Wesentlichen in der Längsrichtung des Fahrzeugkarosserierahmen erstreckt, vorgesehen an der Oberseite und / oder dem Boden des Unterrahmens und des Sitzrahmens (2a, 2b) des Fahrzeugkarosserierahmens.

6. Fahrzeugkarosserierahmen nach einem der vorhergehenden Ansprüche 1 bis 5, **dadurch gekennzeichnet, dass** ein nach innen ausgerichteter Flansch an einer Position rund um die Öffnung (11) zum Montieren der Antriebsquelle vorgesehen ist, der nach unten des Fahrzeugkarosserierahmens öffnet.

7. Fahrzeugkarosserierahmen nach einem der vorhergehenden Ansprüche 1 bis 6, **gekennzeichnet dadurch, dass** das zumindest eine Verstärkungsteil im Wesentlichen parallel mit der Richtung der Spannung ist, die durch eine Last, ausgeübt auf den Fahrzeugkarosserierahmen, erzeugt wird.

8. Fahrzeugkarosserierahmen nach einem der vorhergehenden Ansprüche 1 bis 7, **dadurch gekennzeichnet, dass** der Fahrzeugkarosserierahmen aus einer Leichtlegierung oder Kunststoff durch Gießen einstückig gebildet ist.

9. Fahrzeugkarosserierahmen nach einem der vorhergehenden Ansprüche 1 bis 8, **dadurch gekennzeichnet, dass** zumindest ein Verstärkungsteil mit dem Fahrzeugkarosserierahmen einstückig gebildet ist.

10. Fahrzeugkarosserierahmen nach einem der vorhergehenden Ansprüche 1 bis 9, **dadurch gekennzeichnet, dass** der Fahrzeugkarosserierahmen in linke und rechte Hälften (21, 2r) geteilt ist, wobei jede Hälfte (21, 2r) von vom nach hinten des Fahrzeugkarosserierahmens einstückig gebildet ist, wobei die Hälften (21, 2r) verbunden sind, um den Fahrzeugkarosserierahmen zu bilden.

11. Fahrzeugkarosserierahmen nach Anspruch 10, **dadurch gekennzeichnet, dass** eine Verbindung zwischen den linken und rechten Hälften (21, 2r) des Fahrzeugkarosserierahmens mit einem Verstärkungsteil gebildet ist, das sich im Wesentlichen in der Längsrichtung der Fahrzeugkarosserie erstreckt.

12. Fahrzeugkarosserierahmen nach Anspruch 10 oder 11, **dadurch gekennzeichnet, dass** leichte Spalte zwischen den Enden der linken und rechten Verstärkungsrippen gebildet sind, so dass die Enden des Verstärkungsteils der linken Hälfte der Fahrzeugkarosserie und die Enden des Verstärkungsteils der rechten Hälfte der Fahrzeugkarosserie von dem Fahrzeugkarosserierahmen nicht miteinander in Kontakt kommen.

13. Fahrzeug mit zwei oder drei Rädern, aufweisend einen Fahrzeugkarosserierahmen, der von einem vorderen Abschnitt bis zu einem hinteren Abschnitt einstückig gebildet ist, **gekennzeichnet durch** einen Fahrzeugkarosserierahmen mit den Merkmalen von einem der vorhergehenden Ansprüche 1 bis 12.

14. Fahrzeug nach Anspruch 13, **dadurch gekennzeichnet, dass** ein oberer Abschnitt des Unterrahmens (2a) mit einem Kopfrohr (6) gebildet ist, zum drehbaren Lagern einer Vordergabel (5) und / oder eine Fahrersitz (8) auf dem Sitzrahmen (2b) montiert ist, so dass er geöffnet und geschlossen werden kann.

## Revendications

1. Cadre de véhicule destiné à un véhicule à deux ou à trois roues étant intégralement formé avec un cadre inférieur (2a) et avec un cadre de selle (2b) et comprenant une ouverture dirigée vers le bas (11) destinée au montage d'une source de puissance (9), dans lequel une partie dudit cadre inférieur (2a) et / ou une partie dudit cadre de selle (2b) est formée avec une section transversale cylindrique creuse (44a, 44b), **caractérisé en ce qu'**au moins un élément de renfort (34) est aménagé sur une surface interne du cadre de véhicule dans des positions situées autour de l'ouverture (11), ledit au moins un élément de renfort (34) étant intégralement formé avec ledit cadre de véhicule et disposé dans des directions inclinées de 10° à 20° à partir d'une partie supérieure avant vers une partie inférieure arrière par rapport à un axe vertical du corps de véhicule.

2. Cadre de véhicule selon la revendication 1, **caractérisé par** au moins un élément de renfort (31a, 31b, 34, 35, 36, 37, 38) aménagé dans ladite section transversale cylindrique creuse (44a, 44b), ledit au moins un élément de renfort s'étendant essentiellement dans le sens de la largeur et / ou essentiellement dans le sens de la hauteur du cadre de véhicule.

3. Cadre de véhicule selon la revendication 1 ou la revendication 2, **caractérisé par** un espace de stockage destiné à stocker des composants ou similaire dans ladite section transversale cylindrique creuse (44a, 44b).

4. Cadre de véhicule selon l'une quelconque des revendications précédentes 1 à 3, **caractérisé en ce que** le cadre de véhicule, lorsqu'il est vu latéralement, a une forme de U ou une forme de V, dans lequel le cadre inférieur (2A) et le cadre de selle (2b) s'étendent vers le haut et sont connectés, dans lequel ledit cadre inférieur (2a) et ledit cadre de selle (2b) du cadre de véhicule sont formés en ladite section transversale cylindrique creuse (44a, 44b).

5. Cadre de véhicule selon l'une quelconque des revendications précédentes 1 à 4, **caractérisé par** au moins un élément de renfort (30, 30a, 30b), qui s'étend essentiellement dans le sens de la longueur du cadre de corps de véhicule, aménagé sur le haut et / ou sur le bas dudit cadre inférieur (2a) et dudit cadre de selle (2b) du cadre de véhicule.

6. Cadre de véhicule selon l'une quelconque des revendications précédentes 1 à 5, **caractérisé en ce qu'**une bride orientée vers l'intérieur est aménagée dans une position entourant l'ouverture (11) afin de monter la source de puissance et s'ouvre vers le bas du cadre de véhicule.

7. Cadre de véhicule selon l'une quelconque des revendications précédentes 1 à 6, **caractérisé par** au moins un élément de renfort qui est essentiellement parallèle à la direction de la tension générée par une charge qui s'exerce sur ledit cadre de véhicule.

8. Cadre de véhicule selon l'une quelconque des revendications précédentes 1 à 7, **caractérisé en ce que** ledit cadre de véhicule est intégralement formé dans un alliage léger ou dans une résine par moulage.

9. Cadre de véhicule selon l'une quelconque des revendications précédentes 1 à 8, **caractérisé en ce que** ledit au moins un élément de renfort est intégralement formé avec ledit cadre de véhicule.

10. Cadre de véhicule selon l'une quelconque des revendications précédentes 1 à 9, **caractérisé en ce que** le cadre de véhicule est divisé en une moitié gauche (21) et une moitié droite (2r), chaque moitié (21, 2r) étant intégralement formée à partir de l'avant jusqu'à l'arrière du cadre de véhicule, lesdites moitiés (21, 2r) étant connectées afin de former le cadre de véhicule.

11. Cadre de véhicule selon la revendication 10, **caractérisé en ce qu'**il est formé une connexion entre les moitiés gauche et droite (21, 2r), un élément de renfort s'étendant essentiellement dans le sens de la longueur du corps de véhicule.

12. Cadre de véhicule selon la revendication 10 ou la revendication 11, **caractérisé en ce que** de faibles espaces sont formés entre les extrémités des nervures de renfort gauches et droites, de telle sorte que les extrémités de l'élément de renfort de ladite moitié gauche du corps de véhicule et les extrémités de l'élément de renfort de la moitié droite du corps de véhicule dudit cadre de véhicule ne viennent pas en contact les unes avec les autres.

13. Véhicule à deux ou à trois roues comprenant un cadre de véhicule qui est intégralement formé à partir d'une partie avant jusqu'à une partie arrière, **caractérisé par** un cadre de véhicule ayant les caractéristiques de l'une quelconque des revendications précédentes 1 à 12.

14. Véhicule selon la revendication 13, **caractérisé en ce qu'**une partie supérieure du cadre inférieur (2a) est formée avec un tube de tête (6) afin de supporter en rotation une fourche avant (5) et / ou une selle de conducteur (8) montée sur le cadre de selle (2b) de manière à pouvoir être opérationnelle et à pouvoir être fermée.
